# NEUE EUROPÄISCHE PATENTSCHRIFT

(11) **EP 3 666 360 B2**
(45) Veröffentlichungstag und Bekanntmachung des Hinweises auf die Entscheidung über den Einspruch: **11.06.2025**
(45) Hinweis auf die Patenterteilung: 15.09.2021
(21) Anmeldenummer: 20154822.9
(22) Anmeldetag: 15.03.2017
(51) Int. Cl.: B01D 39/16

(54) **VERWENDUNG VON BIKOMPONENTFASERN MIT RECYCLIERTEN KUNSTSTOFFEN**
USE OF BICOMPONENT FIBERS COMPRISING RECYCLED POLYMERS
UTILISATION DES FIBRES BICOMPOSANTES COMPRENANT DES PLASTIQUES RECYCLÉS

(30) Priorität: 17.03.2016 EP 16160921; 17.03.2016 EP 16160922; 11.07.2016 EP 16178839; 11.07.2016 EP 16178856; 06.10.2016 EP 16192651; 06.10.2016 EP 16192650
(43) Veröffentlichungstag der Anmeldung: 17.06.2020
(62) Teilanmeldung aus: 17712067.2
(73) Patentinhaber: Eurofilters N.V., 3900 Overpelt (BE)
(72) Erfinder: SAUER, Ralf, 3900 Overpelt (BE); SCHULTINK, Jan, 3900 Overpelt (BE)
(74) Vertreter: Grünecker Patent- und Rechtsanwälte PartG mbB

(56) Entgegenhaltungen:
- EP-A1- 2 826 895
- DE-U1- 202008 016 836
- US-A1- 2004 022 996
- US-A1- 2006 135 021

## Beschreibung

Die vorliegende Erfindung betrifft eine Bikomponentenfaser, die einen recyclierten Kunststoff umfasst.

Filterbeutel aus Vliesstoffen haben Papierfilterbeutel in den letzten 10 Jahren wegen der erheblich besseren Gebrauchseigenschaften praktisch vollständig verdrängt. Insbesondere die Abscheideleistung, die Verstopfungsneigung und die mechanische Festigkeit wurden kontinuierlich verbessert. Die hierfür verwendeten Vliesstoffe sind dabei in der Regel aus thermoplastischen Kunststoffen, insbesondere Polypropylen (PP) und/oder Polyester (PET) gebildet.

Auch wenn noch weiter Bedarf an Verbesserung dieser Eigenschaften besteht, ist trotzdem schon zu spüren, dass die hohen Kosten für die aufwendigen Filterkonstruktionen immer weniger Akzeptanz beim Endkunden finden.

Außerdem wird die Verwendung hochwertiger und schwerer Vliesstoffe für ein Wegwerfprodukt aus ökologischen Gründen immer kritischer gesehen.

Biologisch abbaubare Filterbeutel wie sie in der EP 2 301 404 und der WO 2011/047764 vorgeschlagen werden, scheinen auch kein erfolgversprechender Ansatz zur Verbesserung der ökologischen Eigenschaften zu sein, da Filterbeutel oft über die Müllverbrennung entsorgt werden und eine Kompostierung alleine schon wegen des vornehmlich nicht biologisch abbaubaren Sauggutes nicht in Frage kommt.

Vliesstoff-Filterbeutel für Staubsauger bestehen heute immer aus mehreren Lagen (EP 1198 280, EP 2 433 695, EP 1 254 693). Zum Einsatz kommen Stützlagen, um die notwendige mechanische Festigkeit zu erreichen, Grobfilterlagen, die eine hohe Speicherkapazität für Staub aufweisen, ohne dass sich der Luftwiderstand zu stark erhöht und Feinfilterlagen zur Filtration von Partikeln < 1 µm.

Zur Erhöhung der Staubspeicherfähigkeit werden seit einigen Jahren zusätzlich Diffusoren und Trennwände in Filterbeuteln eingesetzt, die die Strömungsverhältnisse im Filterbeutel optimieren sollen, um so die Standzeit zu erhöhen.

Zur Fertigung dieser unterschiedlichen Materialien kommen verschiedenste Technologien zum Einsatz. Als Feinfilterlage werden meist Meltblown Mikrofaservliesstoffe verwendet. Diese Meltblownvliesstoffe sind Extrusionsvliesstoffe, bestehen meist aus Polypropylen und weisen Filamentdurchmesser im Bereich von unter 1 µm bis zu wenigen µm auf. Um hohe Abscheideleistung zu erreichen, werden diese Materialien elektrostatisch aufgeladen (z. B. mittels Coronaentladung). Zur weiteren Verbesserung der Abscheideleistung wurde vorgeschlagen, im Elektrospinnverfahren hergestellte Nanofasern auf Vliesstoffträgermaterialien aufzubringen (DE 199 19 809).

Für die Kapazitätslage kommen sowohl kardierte Stapelfaservliesstoffe, Extrusionsvliesstoffe, aber auch Faservliese (EP 1 795 247) aus Stapelfasern oder Filamenten zum Einsatz. Als Materialien für Kapazitätslagen werden meist Polypropylen oder Polyester, aber auch Fluff Pulp (EP 0 960 645, EP 1 198 280) verwendet.

Der Einsatz recycelter Kunststoffe (z. B. recyceltes Polyethylenterephthalat (rPET)) für Gewebe wurde in der WO 2013/106392 vorgeschlagen.

Die Verwendung von rPET als Rohstoff für Meltblown-Vliesstoffe wurde bereits untersucht (Handbook of Nonwovens, Woodhead Publishing Ltd., Ed. by S.J. Russelt, Kapitel 4.10.1).

Die CN101747596 beschreibt die Verwendung von recyclierten PET bzw. recyclierten PBT (rPET/rPBT) als Material für Microfilamente.

EP 2 826 895 A1 betrifft eine Bikomponentenfaser zur Herstellung von Spinnvliesen, mit einer ersten und zweiten Komponente, die jeweils ein Additiv beinhalten, wobei der Massenanteil des Additivs in der zweiten Komponente kleiner ist als in der ersten Komponente. Bei der Herstellung der Bikomponentenfaser kann ein Anteil recyclierten Materials einer der Komponenten zugesetzt werden.

Ausgehend hiervon ist es somit Aufgabe der vorliegenden Erfindung, Staubsaugerfilterbeutel anzugeben, die den auf den Markt befindlichen Staubsaugerfilterbeuteln in den Punkten Staubabscheideleistung und Standzeit in Nichts nachstehen und somit hervorragende Gebrauchseigenschaften aufweisen, jedoch vorwiegend aus wiederverwerteten Materialien oder aus Abfallmaterialien bestehen. Insbesondere ist es daher Aufgabe der vorliegenden Erfindung, ökologisch wie auch ökonomisch besonders vorteilhafte Staubsaugerfilterbeutel zu realisieren. Es soll vorzugsweise ein Anteil an wiederverwerteten Materialien im Filterbeutel von mindestens 40% realisiert werden.

Diese Aufgabe wird gelöst durch die Verwendung einer Bikomponentenfaser zur Herstellung eines Vliesstoffes gemäß Patentanspruch 1. Die abhängigen Patentansprüche stellen dabei vorteilhafte Weiterbildungen dar.

In der vorliegenden Beschreibung sind, sofern nicht anders angegeben, alle Aspekte, die Merkmale des beschriebenen Staubsaugerbeutels betreffen, nicht Teil der beanspruchten Erfindung.

Es wird ein Staubsaugerfilterbeutel, der eine einen Innenraum umschließende Wandung aus einem luftdurchlässigen Material umfasst, beschrieben. In das luftdurchlässige Material ist eine Einlassöffnung eingebracht. Der Staubsaugerfilterbeutel zeichnet sich dadurch aus, dass das luftdurchlässige Material mindestens eine Lage eines Vliesstoffes umfasst, der staubund/oder faserförmiges recycliertes Material aus der Herstellung von Textilien, insbesondere Baumwolltextilien und/oder Baumwolllinters umfasst.

Das faser- und/oder staubförmige recyclierte Material aus der Herstellung von Textilien fällt insbesondere bei der Prozessierung von Textilmaterialien, wie beispielsweise der Herstellung, dem Schneiden, dem Trocknen oder dem Recyceln von Textilmaterialien an. Als recyclierte Materialien können dabei insbesondere sowohl pre- als auch post-consumer-Textil-Abfallmaterialien eingesetzt werden.

Beispielsweise können für die Herstellung der faser- und/oder staubförmige recyclierte Materialien recyclierte Textilmaterialien (die beispielsweise bei der Herstellung von Textilien als Schnittabfälle anfallen) verwendet werden. Das faser- und/oder staubförmige recyclierte Material kann beispielsweise durch Auflösen des textilen Faserverbandes aus den Textilmaterialine gewonnen werden. Vorzugsweise erfolgt das Auflösen des Faserverbandes durch Reißen oder mittels einer Hammermühle. Hierbei wird der Faserverband bis hin zur Einzelfaser aufgelöst. Dieses Material, d.h. das faser- und/oder staubförmige recyclierte Material, wird auch als "Reißfaser" bezeichnet und kann für die Staubsaugerfilterbeutel beispielsweise in einem Vlieslegeverfahren (insbesondere mittels eines Airlaidverfahrens oder eines Kreuzlegeverfahrens (cross-lapping)) zu einem Faservlies gelegt und ggf. zu einem Vliesstoff gebunden werden und als Materiallage für einen Staubsaugerfilterbeutel eingesetzt werden. Derartige Reißfasern weisen ein äußerst positives Eigenschaftsbild auf. Ihre bei der Herstellung erfahrene mechanische Beanspruchung führt zu einem breiten Faserlängenspektrum mit auch sehr kurzen Fasern. Hierdurch resultiert eine große Oberfläche und dadurch bedingt ein sehr großes Staubspeichervermögen. Außerdem sind nicht vollständig aufgelöste Faden- und Flächenstücke vorhanden, die in dieser Form zu einer speziellen und vorteilhaften Matrixbildung führen.

Derartige Reißfasern stellen somit insbesondere Textilfasern aus Baumwolle, Polyester, Elastan, Flachs, Leinen, Hanf, Kamelhaar, Lama, Mohair, Polyamid, Polyethylen, Ramie, Seide, Viskose, Jute, Kokos, Modal, Polyacryl, Polypropylen, Schafwolle, Sisal, Ziegenhaar sowie Baumwollstaub sowie Mischungen und Kombinationen hiervon dar.

Als weitere mögliche faser- und/oder staubförmigen Materialien für die Zwecke der Staubsaugerfilterbeutel eignen sich beispielsweise Abfallmaterialien, die sich auf den zur Verarbeitung der Textilien verwendeten Maschinen oder Filtermaterialien absetzen können. Die Stäube bzw. Fasern werden normalerweise entsorgt und thermisch verwertet.

Baumwolllinters sind kurze Baumwollfasern, die am Baumwollsamenkern anhaften, nachdem das lange Samenhaar (Baumwolle) vom Kern entfernt worden ist. Baumwolllinters sind in der Faserlänge (1 bis 6 mm) und im Reinheitsgrad stark verschieden, nicht spinnbar und stellen in der Textilindustrie normalerweise einen nicht verwertbaren Reststoff und somit ein Abfallprodukt dar. Auch Baumwolllinters können für die Vliesstoffe, die in luftdurchlässigen Materialien für die Staubsaugerfilterbeutel eingesetzt werden können, verwendet werden.

In der Vliesstofflage bzw. Faservlieslage, die im luftdurchlässigen Material enthalten ist, ist das faser- und/oder staubförmige recyclierte Material bzw. sind die Baumwolllinters gebunden bzw. ungebunden. Das Vliesstoffmaterial hat im Gegensatz zu einem Faservlies einen Bindeschritt durchlaufen. Die Bindung des faser- und/oder staubförmigen recyclierten Materials und/oder der Baumwolllinters erfolgt dabei bevorzugt darüber, dass der Vliesstofflage Bindefasern zugesetzt sind, die beispielsweise thermisch aktiviert werden können.

Die Herstellung einer entsprechenden Vliesstofflage kann somit dadurch erfolgen, dass beispielsweise das faser- und/oder staubförmige recyclierte Material und/oder die Baumwolllinters zusammen mit den Bindefasern in einem Kreuzlege- oder einem Airlaid-Prozess abgelegt werden und anschließend - sofern aus dem erzeugten Faservlies ein Vliesstoff erzeugt werden soll - eine Bindung zum fertigen Vliesstoff durch thermische Aktivierung der Bindefasern erfolgt.

In einem Aspekt ist vorgesehen, dass die mindestens eine faser- und/oder staubförmiges recycliertes Material und/oder Baumwollinters umfassende Lage des Vliesstoffes bis zu 95 Gew.-%, bevorzugt 70 bis 90 Gew.-% des faser- und/oder staubförmigen recyclierten Materials und/oder Baumwollinters und mindestens 5 Gew.-%, bevorzugt 10 bis 30 Gew.-% an Bindefasern, insbesondere Bikomponentenfasern umfasst oder hieraus besteht.

Die Bindefasern können dabei z.B. sogenannte "Fusing Fibers" darstellen, die aus thermoplastischen, schmelzbaren Materialien gebildet sind. Diese Fusing Fibers schmelzen bei der thermischen Aktivierung auf und binden den faser- und/oder staubförmige recyclierte Material bzw. die Baumwolllinters.

Weiter vorteilhaft ist hierbei, dass die bevorzugt als Bindefasern eingesetzten Bikomponentenfasern aus einem Kern, bestehend aus einem ersten thermoplastischen Material und einem Mantel, bestehend aus einem verglichen mit dem ersten thermoplastischen Material bei geringeren Temperaturen schmelzenden zweiten thermoplastischen Material, bestehen, wobei gemäß der Erfindung der Kern oder sowohl Kern als auch Mantel aus einem recyclierten Kunststoff oder mehreren recyclierten Kunststoffen besteht. In einer besonders bevorzugten Ausführungsform ist der Kern der zuvor angesprochenen Kern-Mantel-Bikomponentenfasern dabei aus einem Kunststoff-Recyclat gebildet, während der Mantel aus einem frischen Kunststoff (virgin-Kunststoff) oder ebenso aus einem Kunststoff-Recyclat gebildet ist. Beispielsweise kann der Kern einer derartigen Bikomponentenfaser aus recycliertem PET gebildet sein, während der Mantel aus frischem PP gebildet ist.

Die bevorzugt als Bindefasern eingesetzten Fusing Fibers oder Bikomponentenfasern können dabei teilweise oder vollständig aus recyclierten Kunststoffen bestehen.

Ein entsprechender Vliesstoff, der durch Binden von faser- und/oder staubförmigen recyclierten Materialien aus der Herstellung von Textilien und Bikomponentenfasern erzeugt wird, eignet sich insbesondere als Kapazitätslage in einem vorgestellten Staubsaugerfilterbeutel. Einem derartigen Vliesstoff können noch zusätzliche Komponenten, wie beispielsweise Mikrostapelfasern, Crimp-Stapelfasern, Fasern mit nicht-runden Querschnittem, Spinnabfällen etc. zugesetzt werden.

In einer bevorzugten Ausführungsform sind die Bindefasern Stapelfasern, insbesondere mit einer Länge von 1 bis 75 mm, bevorzugt 2 bis 25 mm.

Für den vorgestellten Staubsaugerfilterbeutel kann beispielsweise ein Vliesstoff verwendet werden, wie er in der WO 2011/057651 A1 beschrieben ist.

In einem weiteren Aspekt ist das luftdurchlässige Material mehrlagig aufgebaut, wobei das luftdurchlässige Material zusätzlich zur mindestens einen Lage des Vliesstoffes, der faser- und/oder staubförmiges recycliertes Material und/oder Baumwolllinters umfasst, mindestens eine weitere Lage aufweist, die einen Vliesstoff und/oder ein Faservlies umfasst oder hieraus gebildet, wobei insbesondere mindestens eine, mehrere oder sämtliche der zusätzlichen Lagen einem oder mehrere recyclierte Kunststoffe umfassen oder hieraus gebildet sind.

Der für die Zwecke der vorliegenden Erfindung verwendete Begriff "recyclierter Kunststoff" ist dabei synonym zu verstehen zu Kunststoff-Recyclaten. Zur begrifflichen Definition wird hierbei auf die Norm DIN EN 15347:2007 verwiesen.

Mindestens eine dieser Lagen ist somit bevorzugt ein Vliesstoff bzw. ein Faservlies, das recyclierte Kunststoffe umfasst und insbesondere aus recyclierten Kunststoffen gebildet ist. Im Unterschied zum aus dem Stand der Technik bekannten Staubsaugerfilterbeuteln wird somit weniger oder gar kein frisches (virgin) Kunststoffmaterial zur Herstellung der der Wandung des Staubsaugerfilterbeutels zugrundeliegenden Vliesstoffen bzw. Faservliesen verwendet, sondern es gelangen überwiegend oder ausschließlich Kunststoffe zum Einsatz, die bereits in Verwendung waren und durch entsprechende Recycling-Verfahren wiedergewonnen wurden. Derartige Filterbeutel sind in ökologischer Hinsicht deutlich vorteilhaft, da sie in hohem Maße rohstoffneutral hergestellt werden können. Diese Filterbeutel bieten ebenso ökonomische Vorteile, da die meisten recyclierten Kunststoffmaterialien deutlich günstiger bezogen werden können, als die entsprechenden Rohstoffe, die nicht recycliert sind ("virgin" Kunststoffe).

Ein Vliesstoff bezeichnet dabei ein Wirrgelege, das einen Verfestigungsschritt durchlaufen hat, so dass es eine ausreichende Festigkeit aufweist, um zum Beispiel zu Rollen auf- bzw. abgewickelt zu werden. Ein Faservlies entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel zu Rollen auf- bzw. abgewickelt zu werden. Bezüglich der Definition dieser Terminologie wird auf die EP 1 795 427 A1 verwiesen.

Gemäß einem Aspekt sind die Fasern des Vliesstoffs bzw. des Faservlieses, das im luftdurchlässigen Material der Wandung des erfindungsgemäßen Staubsaugerfilterbeutels beinhaltet ist, aus einem einzigen recyclierten Kunststoffmaterial gebildet.

Alternativ ist es jedoch ebenso bevorzugt, wenn die Fasern des Vliesstoffes bzw. des Faservlieses aus unterschiedlichen Materialien gebildet sind, von denen zumindest eines einen recyclierten Kunststoff darstellt. Hierbei sind insbesondere zwei Ausführungsformen denkbar:
Einerseits kann es sich um ein Gemisch mindestens zweier Fasertypen handeln, beispielsweise um Fasergemische, die aus zumindest zwei unterschiedlichen recyclierten Kunststoffen gebildet sind.

Andererseits ist es ebenso möglich, dass das Faservlies bzw. der Vliesstoff Bikomponentenfasern (BiKo-Fasern) beinhaltet oder hieraus gebildet ist, die aus einem Kern, sowie einem den Kern umhüllenden Mantel bestehen. Kern und Mantel sind dabei aus unterschiedlichen Materialien gebildet. Die Bikomponentenfasern können als Stapelfasern vorliegen oder als Extrusionsvliesstoff (beispielsweise aus Meltblownvliesstoff) ausgebildet sein, so dass die Bikomponentenfasern theoretisch unendliche Länge aufweisen und sogenannte Filamente darstellen. Bei derartigen Bikomponentenfasern ist es von Vorteil, wenn zumindest der Kern aus einem recyclierten Kunststoff gebildet ist, für den Mantel kann beispielsweise auch ein Virgin-Kunststoff, aber alternativ ebenso ein anderer recyclierter Kunststoff eingesetzt werden.

Für die Vliesstoffe bzw. Faservliese ist es möglich, dass es sich hierbei um trockengelegte, nassgelegte oder Extrusionsvliesstoffe handelt. Demzufolge können die Fasern der Vliesstoffe bzw. Faservliese endliche Länge aufweisen (Stapelfasern), aber auch theoretisch unendliche Länge aufweisen (Filamente). Insgesamt kann der Aufbau der Wandung des Filterbeutels ebenso ausgestaltet sein, wie in der EP 1 795 247 beschrieben. Eine derartige Wandung umfasst somit mindestens drei Lagen, wobei mindestens zwei Lagen aus mindestens einer Vliesstofflage und mindestens einer Faservlieslage, enthaltend Stapelfasern und/oder Filamente bestehen. Die Wandung des Staubsaugerfilterbeutels zeichnet sich demnach zusätzlich durch eine Schweißverbindung aus, bei der sämtliche Lagen des Filtermaterials durch Schweißverbindungen miteinander verbunden sind. Der Pressflächenanteil des Schweißmusters beträgt dabei maximal 5 % der Oberfläche der durchströmbaren Fläche des Filtermaterials bzw. Staubsaugerfilterbeutels. Bezogen auf die gesamte durchströmbare Fläche des Filterbeutels liegen durchschnittlich maximal 19 Schweißverbindungen pro 10 cm² vor. Beispielsweise kann das luftdurchlässige Material in einer Weise ausgestaltet sein, wie es im einleitenden Teil der vorliegenden Patentanmeldung beschrieben ist, also z.B. wie in EP 1 198 280, EP 2 433 695, EP 1 254 693, DE 199 19 809, EP 1 795 247, WO 2013/106 392 oder CN 101747596 beschrieben, solange faser- und/oder staubförmiges recycliertes Material aus der Herstellung von Textilien und/oder Baumwolllinters für die Herstellung dieser Filtermaterialien verwendet wurde.

Mehrere besonders bevorzugte Möglichkeiten der mehrlagigen Ausgestaltung des luftdurchlässigen Materials werden nachfolgend vorgestellt. Die Mehrzahl dieser Lagen kann mittels Schweißverbindungen, insbesondere wie in der EP 1 795 427 A1 beschrieben, miteinander verbunden sein. Die Lagen können untereinander auch verklebt oder wie in WO 01/003802 beschrieben gebondet sein.

Beim zuvor genannten mehrlagigen Aufbau des luftdurchlässigen Materials sind insbesondere die folgenden Aspekte vorteilhaft.

Gemäß einem ersten Aspekt weist das luftdurchlässige Material mindestens eine Stützlage und mindestens eine Kapazitätslage auf, wobei mindestens eine oder sämtliche der Stützlagen Vliesstoffe und/oder mindestens eine oder sämtliche der Kapazitätslagen Vliesstoffe oder Faservliese, die einen recyclierten Kunststoff oder mehreren recyclierte Kunststoffe umfassen oder hieraus gebildet sind, darstellen.

Alternativ hierzu ist es ebenso möglich, dass das luftdurchlässige Material mindestens eine Stützlage, mindestens eine Feinfilterlage und mindestens eine Kapazitätslage aufweist, wobei mindestens eine oder sämtliche der Stützlagen und/oder mindestens eine oder sämtliche der Feinfilterlagen Vliesstoffe, die einen recyclierten Kunststoff oder mehrere recyclierte Kunststoffe umfassen oder hieraus gebildet sind und/oder mindestens eine oder sämtliche der Kapazitätslagen Vliesstoffe oder Faservliese, die einen recyclierten Kunststoff oder mehrere recyclierte Kunststoffe umfassen oder hieraus gebildet sind, darstellen.

Bei den beiden zuvor genannten Aspekten ist dabei vorgesehen, dass mindestens eine, bevorzugt sämtliche der Kapazitätslagen den voranstehend näher charakterisierten Vliesstoff, der faser- und/oder staubförmiges recycliertes Material und/oder Baumwolllinters umfasst, umfassen oder hieraus gebildet sind. Durch die erfolgte Vliesbindung weist die als Kapazitätslage ausgebildete Vliesstofflage dabei eine derart hohe mechanische Festigkeit auf, dass sie auch als Stützlage fungieren kann.

Ebenso ist es möglich die Außenlage auf der Reinluftseite aus einem relativ dünnen Material auf Basis von Linters und/oder Baumwollstaub zu machen. Als Außenlage kommt ebenso ein Spinnvlies, das recycliertes faser- und/oder staubförmiges Material beinhaltet, in Frage.

Ein weiterer Aspekt sieht vor, dass das luftdurchlässige Material eine äußere Lage aus einem Spinnvlies, eine oder zwei Feinfilterlagen sowie eine innere Kapazitätslage aufweist. Die Spinnvlieslage umfasst dabei das faser- und/oder staubförmige recyclierte Material und/oder Baumwolllinters oder ist hieraus gebildet. Die Feinfilterlage(n) ist(sind) hierbei bevorzugt aus einem Meltblown, insbesondere aus einem Meltblown aus rPET oder rPP gebildet. Die Kapazitätslage ist z.B. ein Vliesstoff, der aus Textilien erzeugten Reißfasern, die mit Bikomponentenfasern gebunden sind, besteht. Die Bikomponentenfasern weisen dabei bevorzugt einen Kern aus rPET und eine Hülle aus frischem PP auf.

Die einzelnen Lagen sind dabei entsprechend ihrer Funktion näher bezeichnet.

Eine Stützlage im Sinne der vorliegenden Erfindung ist dabei eine Lage, die dem mehrlagigen Verbund des Filtermaterials die notwendige mechanische Festigkeit verleiht. Hierunter wird ein offener, poröser Vliesstoff bzw. ein Nonwoven mit leichtem Flächengewicht bezeichnet. Eine Stützlage dient in allererster Linie dazu, andere Lagen oder Schichten zu stützen und vor Abrasion zu schützen. Die Stützlage kann auch die größten Partikel filtern. Die Stützlage, wie auch jede andere Lage des Filtermaterials kann gegebenenfalls auch elektrostatisch aufgeladen sein, unter der Voraussetzung, dass das Material geeignete dielektrische Eigenschaften aufweist.

Eine Kapazitätslage bietet einen hohen Widerstand gegenüber Stoßbelastung, Filtern von großen Schmutzpartikeln, Filtern eines signifikanten Anteils von kleinen Staubpartikeln, Speichern bzw. Zurückhalten von großen Mengen an Partikeln, wobei der Luft ein einfaches Durchströmen erlaubt wird und somit ein geringer Druckabfall bei hoher Partikelbeladung resultiert. Dies wirkt sich insbesondere auf die Standzeit eines Staubsaugerfilterbeutels aus.

Eine Feinfilterlage dient der Erhöhung der Filtrationsleistung des mehrlagigen Filtermaterials durch Einfangen von Partikeln, die beispielsweise durch die Stützlage und/oder die Kapazitätslage hindurch gelangen. Zur weiteren Erhöhung der Feinfilterlage kann diese bevorzugt elektrostatisch (z.B. durch Coronaentladung) aufgeladen werden, um insbesondere die Abscheidung von Feinstaubpartikeln zu erhöhen.

Einen Überblick über die einzelnen Funktionslagen innerhalb mehrlagiger Filtermaterialien für Staubsaugerfilterbeutel bietet die WO 01/003802. Das luftdurchlässige Material der Wandung des erfindungsgemäßen Staubsaugerfilterbeutels kann hinsichtlich seiner Konstruktion beispielsweise wie in diesem Patentdokument aufgebaut sein mit der Maßgabe, dass zumindest eine der Lagen des dort beschriebenen mehrlagigen Filtermaterials für den Staubsaugerfilterbeutel aus einem recyclierten bzw. mehreren recyclierten Kunststoffen gebildet ist.

Spezielle Beispiele der zuvor genannten Aspekte sehen vor, dass jede Stützlage ein Spinnvlies oder Scrim ist, vorzugsweise mit einer Grammatur von 5 bis 80 g/m², weiter bevorzugt von 10 bis 50 g/m², weiter bevorzugt von 15 bis 30 g/m² und/oder vorzugsweise mit einem Titer der das Spinnvlies bzw. das Scrim bildenden Fasern im Bereich von 0,5 dtex bis 15 dtex.

Bevorzugt weist das luftdurchlässige Material ein bis drei Stützlagen auf.

Im Falle des Vorhandenseins mindestens zweier Stützlagen ist es bevorzugt, dass die Gesamtgrammatur der Summe aller Stützlagen 10 bis 240 g/m², bevorzugt 15 bis 150 g/m², weiter bevorzugt 20 bis 100 g/m², weiter bevorzugt 30 bis 90 g/m², insbesondere 40 bis 70 g/m² beträgt.

Alternativ oder zusätzlich zu den zuvor genannten Aspekten ist es ebenso möglich, dass sämtliche Stützlagen aus einem recyclierten Kunststoff oder mehreren recyclierten Kunststoffen, insbesondere aus rPET gebildet sind.

Bei den zuvor genannten Feinfilterlagen ist es von Vorteil, wenn jede Feinfilterlage ein Extrusionsvliesstoff, insbesondere ein Meltblown-Vliesstoff ist, vorzugsweise mit einer Grammatur von 5 bis 100 g/m², bevorzugt 10 bis 50 g/m², insbesondere 10 bis 30 g/m².

Das luftdurchlässige Material für die Zwecke des Staubsaugerfilterbeutels kann dabei vorteilhaft ein bis fünf Feinfilterlagen umfassen.

Im Falle des Vorhandenseins mindestens zweier Feinfilterlagen kann die Gesamtgrammatur der Summe aller Feinfilterlagen 10 bis 300 g/m², bevorzugt 15 bis 150 g/m², insbesondere 20 bis 50 g/m² betragen.

Bevorzugt sind sämtliche Feinfilterlagen aus einem recyclierten Kunststoff oder mehreren recyclierten Kunststoffen, insbesondere rPET gebildet.

Besonders bevorzugte Feinfilterlagen sind hierbei Meltblown-Vliesstoffe, die insbesondere aus rPET gebildet werden können. Das eingesetzte rPET kann dabei nicht metallisiert oder metallisiert sein. Das rPET kann somit beispielsweise aus Getränkeflaschen (bottle flake chips) oder metallisierten PET-Folien stammen. Ebenso ist es möglich, dass die Melt-Blown-Vliesstoffe Bikomponenten-Melt-Blown-Vliesstoffe darstellen. Hierbei ist es insbesondere von Vorteil, wenn der Kern einer derartigen Bikomponentenfaser aus rPET besteht, dieses Kernmaterial wird von einem weiteren thermoplastischen Kunststoff, beispielsweise Polypropylen umhüllt.

Alternativ oder zusätzlich zu den zuvor genannten Aspekten ist es ebenso möglich und insbesondere bevorzugt, wenn mindestens eine, bevorzugt sämtliche Feinfilterlagen elektrostatisch aufgeladen sind. Dies setzt voraus, dass zumindest die Oberfläche der aufzuladenden Fasern aus einem dielektrischen Material gebildet ist. Im Falle des Einsatzes von metallisiertem PET-Recyclat ist diese Ausführungsform dann lediglich im Rahmen der zuvor angesprochenen Bikomponentenfasern möglich, bei denen das metallisierte rPET den Kern der Fasern bildet. Die elektrostatische Aufladung kann dabei insbesondere Coronaentladung erfolgen.

Bei den zuvor genannten Kapazitätslagen ist es insbesondere von Vorteil, wenn mindestens eine, bevorzugt jede Kapazitätslage ein Vliesstoff ist, der faser- und/oder staubförmiges recycliertes Material aus der Herstellung von Textilien und/oder Baumwolllintes umfasst, wobei jede Kapazitätslage vorzugsweise eine Grammatur von 5 bis 200 g/m², weiter bevorzugt von 10 bis 150 g/m², weiter bevorzugt von 20 bis 100 g/m², insbesondere 30 bis 50 g/m² aufweist.

Das luftdurchlässige Material weist bevorzugt ein bis fünf Kapazitätslagen auf.

Im Falle des Vorhandenseins mindestens zweier Kapazitätslagen kann die Gesamtgrammatur der Summe aller Kapazitätslagen 10 bis 300 g/m², bevorzugt 15 bis 200 g/m², weiter bevorzugt 20 bis 100 g/m², insbesondere 50 bis 90 g/m² betragen.

Ein Aspekt sieht die folgenden mehrlagigen Varianten für das luftdurchlässige Material vor, mit einer vom Innenraum des Staubsaugerfilterbeutels ausgesehenen Lagenfolge:
Eine Stützlage, mindestens eine, vorzugsweise mindestens zwei Kapazitätslagen, vorzugsweise eine weitere Stützlage, mindestens eine vorzugsweise mindestens zwei Feinfilterlagen sowie eine weitere Stützlage. Für den Fall, dass die Kapazitätslage eine wie voran beschrieben hohe mechanische Festigkeit aufweist, kann dabei auch auf die innerste Stützlage verzichtet werden.

Eine oder zwei Kapazitätslagen, eine oder zwei Feinfilterlagen (Meltblownlagen), eine Stützlage (Spinnvlies).

Die Stützlagen und/oder Kapazitätslagen) können dabei aus einem Vliesstoffmaterial gebildet sein, das faser- und/oder staubförmiges recycliertes Material aus der Herstellung von Textilien, insbesondere Baumwolltextilien und/oder Baumwolllinters umfasst.

In einem Aspekt bildet dieses Vliesstoffmaterial die mindestens eine Kapazitätslage, während die anderen Lagen kein faser- und/oder staubförmiges recycliertes Material aus der Herstellung von Textilien, insbesondere Baumwolltextilien und/oder Baumwolllinters umfassen.

Es können sämtliche Lagen bei den zuvor genannten Ausführungsformen auch mittels Schweißverbindungen, insbesondere wie in EP 1 795 427 A1 beschrieben, miteinander verbunden sein. Schweißverbindungen sind allerdings nicht zwingend notwendig.

Weiter vorteilhaft ist, dass der Staubsaugerfilterbeutel eine eine die Einlassöffnung einfassende Halteplatte aufweist, die aus einem oder mehreren recycelten Kunststoffen gebildet ist oder einen oder mehrere recycelte Kunststoffe umfasst. Insbesondere ist die Halteplatte dabei aus rPET gebildet oder umfasst rPET zu einem sehr hohen Anteil, beispielsweise zu mindestens 90 Gew.%. Gemäß dieser bevorzugten Ausführungsform ist somit eine weitere Erhöhung des Anteils an recyclierten Kunststoffen im Staubsaugerfilterbeutel möglich.

Gemäß einem weiteren Aspekt ist vorgesehen, dass im Innenraum mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen oder aus einem Vliesstoffes, der faser- und/oder staubförmiges recycliertes Material aus der Herstellung von Textilien, insbesondere Baumwolltextilien und/oder Baumwolllinters umfasst, gebildet ist. Derartige Strömungsverteiler bzw. Diffusionen sind z.B. in den Patentanmeldungen EP 2 263 508, EP 2 442 703, DE 20 2006 020 047, DE 20 2008 003 248, DE 20 2008 005 050 bekannt. Auch die erfindungsgemäßen Staubsaugerfilterbeutel, inklusive Strömungsverteiler können entsprechend ausgestaltet sein.

Strömungsverteiler und Diffusoren werden somit vorzugsweise ebenfalls aus Vliesstoffen oder Laminaten von Vliesstoffen gefertigt. Für diese Elemente kommen bevorzugt die gleichen Materialien in Frage, wie für die Kapazitäts- und Verstärkungslagen.

Der recyclierte Kunststoff, der in speziellen Vliesstoffmaterialien oder in Halteplatten für die Staubsaugerfilterbeutel verwendet werden kann, ist dabei bevorzugt ausgewählt aus der Gruppe bestehend aus recyclierten Polyestern, insbesondere recycliertem Polyethylenterephthalat (rPET), recycliertem Polybutylenterephthalat (rPBT), recylcierter Polymilchsäure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden sowie Mischungen und Kombinationen hiervon.

Für viele Kunststoff-Recyclate bestehen einschlägige internationale Normen. Für PET-Kunststoff-Recyclate ist beispielsweise die DIN EN 15353:2007 einschlägig. PS-Recyclate werden in DIN EN 15342:2008 näher beschrieben. PE-Recyclate werden in DIN EN 15344:2008 behandelt. PP-Recyclate werden in DIN EN 15345:2008 charakterisiert. PVC-Recyclate sind in DIN EN 15346:2015 näher bezeichnet. Zum Zwecke der entsprechenden speziellen Kunststoffrecyclate macht sich die vorliegende Patentanmeldung die Definitionen dieser internationalen Normen zu Eigen. Die Kunststoff-Recyclate können dabei unmetallisiert sein. Ein Beispiel hierfür sind aus PET-Getränkeflaschen zurückgewonnene Kunststoffflakes oder -chips. Ebenso können die Kunststoff-Recyclate metallisiert sein, z.B. wenn die Recyclate aus metallischen Kunststofffolien erhalten wurden, insbesondere metallisierten PET-Folien (MPET).

Bei dem recyclierten Kunststoff handelt es sich insbesondere um recycliertes Polyethylenterephthalat (rPET), das beispielsweise aus Getränkeflaschen, insbesondere aus sog. Bottleflakes, also Stücke gemahlener Getränkeflaschen, erhalten wurde.

Die recyclierten Kunststoffe, insbesondere das recyclierte PET, sowohl in der metallisierten, als auch in der nicht metallisierten Fassung, können zu den entsprechenden Fasern versponnen werden, aus denen die entsprechenden Stapelfasern bzw. Meltblown- oder Spunbonds-Vliesstoffe hergestellt werden können.

Ein anderer Aspekt sieht vor, dass die Gewichtssumme der Baumwolllinters und der ggfs. vorhandenen recyclierten Materialien, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt. Somit können sämtliche der vom Global Recycle Standard (GRS) von Textile Exchange vorgegebenen Klassifizierungen erreicht werden.

Der Staubsaugerfilterbeutel kann beispielsweise in Form eines Flachbeutels, eines Seitenfaltenbeutels, eines Blockbodenbeutels oder eines 3D-Beutels, wie beispielsweise eines Staubsaugerfilterbeutels für einen Upright-Staubsauger ausgebildet sein. Ein Flachbeutel weist dabei keine Seitenwände auf und ist aus zwei Materiallagen gebildet, wobei die beiden Materiallagen entlang ihres Umfangs unmittelbar miteinander verbunden, beispielsweise verschweißt oder verklebt sind. Seitenfaltenbeutel stellen eine modifizierte Form eines Flachbeutels dar und umfassen festgelegte oder ausstülpbare Seitenfalten. Blockbodenbeutel umfassen einen sogenannten Block- oder Klotzboden, der zumeist die Schmalseite des Staubsaugerfilterbeutels bildet; an dieser Seite ist in der Regel eine Halteplatte angeordnet.

Zudem wird die Verwendung von Vliesstoffen, die faser- und/oder staubförmiges recycliertes Material aus der Herstellung von Textilien, insbesondere Baumwolltextilien und/oder Baumwolllinters umfassen, für Staubsaugerfilterbeutel vorgestellt. Hinsichtlich der speziellen Ausgestaltung derartiger Vliesstoffe wird auf die voranstehenden Aspekte verwiesen.

Es werden Filterbeutel konzipiert, die eine oder mehrere Lagen aus einem Airlaid-Vliesstoff aufweisen. Zusätzlich können die nachfolgend beschriebenen erfindungsgemäßen Filterbeutel eine oder mehrere Lagen rPET-Filamente oder rPET-Stapelfasern aufweisen, der aus Baumwollstaub und Bicomponentenfasern gebildet wird. Die unterschiedlichen Vliesstoffe sind dabei nur für bestimmte Materiallagen geeignet. Um den Anteil an wiederverwerteten Rohstoffen noch weiter zu steigern, ist zusätzlich noch der Einsatz einer Halteplatte möglich, die aus rPET besteht oder zumindest rPET aufweist.

Zu den einzelnen Filterlagen:
Als Stützlagen kommen insbesondere Spinnvlieslagen aus rPET mit einem Flächengewicht von 5 bis 50 g/m² und einem Titer von 1 dtex bis 15 dtex in Frage. Als Rohstoff werden PET-Abfälle (z. B. Stanzabfälle) und sogenannte Bottleflakes, also Stücke gemahlener Getränkeflaschen verwendet. Um die unterschiedliche Färbung der Abfälle zu überdecken, ist es möglich, das Recyclat einzufärben. Als thermisches Bindeverfahren für die Verfestigung des Spinnvlieses zu einem Spunbond ist insbesondere das HELIX^{®} (Comerio Ercole) Verfahren vorteilhaft.

Als Feinfilterlagen werden eine oder mehrere Lagen Meltblown aus rPET mit einem Flächengewicht von jeweils 5 bis 30 g/m² eingesetzt. Zusätzlich können noch eine oder mehrere Meltblown Vliesstofflagen aus PP vorhanden sein. Zumindest diese Lage(n) werden durch eine Coronaentladung elektrostatisch aufgeladen. Die Lagen aus rPET können ebenfalls elektrostatisch geladen werden. Dabei ist lediglich zu beachten, dass dann keine metallisierten PET-Abfälle für die Fertigung verwendet werden. Alternativ können die Meltblownfilamente auch aus Bicomponentenfasern bestehen, bei denen der Kern aus rPET und die Hülle aus einem Kunststoff, der sich besonders gut elektrostatisch aufladen lässt (z. B. PP, PC, PET), gebildet wird.

Eine oder mehrere Kapazitätslagen enthalten rPET-Stapelfasern oder rPET-Filamente oder werden auf Basis von Baumwollstaub und Bicomponentenfasern hergestellt. Zur Herstellung von Kapazitätslagen sind unterschiedliche Verfahren geeignet. Gebräuchlich sind Kardierverfahren oder Airlaidverfahren, bei denen zunächst Stapelfasern abgelegt werden, die dann für gewöhnlich in einem Vliesbindeschritt (z. B. durch Vernadelung, Wasserstrahlverfestigung, Ultraschallkalandrierung oder auch mittels thermischer Verfestigung im Durchströmofen auch mittels Bikomponentenfasern oder Bindefasern) zu einem Vliesstoff verfestigt werden. Zur Kalandrierung ist insbesondere das HELIX^{®} (Comerio Ercole) Verfahren vorteilhaft.

Ebenfalls eingesetzt wird ein Verfahren, bei dem das primär entstandene Faservlies nicht verfestigt wird, sondern mit möglichst wenigen Schweißpunkten an einen Vliesstoff gebunden wird. Dieses Verfahren ist allerdings nicht für die Variante aus Baumwollstaub geeignet. Bei beiden Verfahren ist es möglich, Stapelfasern aus rPET zu verwenden. Kapazitätslagen können auch als Extrusionsvliesstoffe oder Extrusionsfaservliese gefertigt werden. Für diese Vliesstoffe ist ein Einsatz von rPET ebenfalls problemlos realisierbar.

Die Filamente oder Stapelfasern können auch aus Bikomponentenmaterialien bestehen, bei denen der Kern aus rPET und die Hülle aus einem Kunststoff, der sich besonders gut elektrostatisch aufladen lässt (z. B. PP, PC, PET) gebildet wird.

Alternativ oder ergänzend können auch eine oder mehrere Lagen eines Airlaid-Vliesstoffes vorhanden sein, der aus Bikomponentenfasern und Baumwollstaub gebildet wird.

Das Flächengewicht der einzelnen Kapazitätslagen liegt bevorzugt zwischen 10 und 100 g/m².

Die unterschiedlich hergestellten Kapazitätslagen können selbstverständlich auch miteinander kombiniert werden.

Um den Anteil an Recyclaten weiter zu erhöhen, ist die Verwendung einer Halteplatte aus rPET möglich. Wenn die Abdichtung zum Staubsaugerstutzen durch das Beuteilmaterial übernommen wird, kann die Halteplatte ausschließlich aus rPET bestehen. Für den Fall, dass die Halteplatte die Dichtfunktion übernehmen muss, kann eine TPE-Dichtung angespritzt oder angeklebt werden.

Bei Ausnutzung aller Möglichkeiten wird so ein Anteil an Recyclaten bzw. Abfallstoffen von bis zu 96 % möglich. Die folgenden Tabellen geben einige konkrete Ausführungsbeispiele mit einem Recyclatanteil von 61 % bis 89 %.

Aus den verschiedenen recyclathaltigen Vliesstoffen bzw. Faservliesen wurden die nachfolgend dargestellten Staubsaugerfilterbeutel unter Verwendung der angegebenen Materialien konzipiert, deren genaue Zusammensetzung bzw. deren Aufbau in den nachfolgenden Tabellen wiedergegeben ist. Die Staubsaugerfilterbeutel stellen dabei Flachbeutel von rechteckiger Geometrie dar, die eine Abmessung von 300 mm x 280 mm aufweisen.

**Beispiel 1**

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 0 |
| Filterbeutel gesamt | | 31,4 | **60,5** |

Der Staubsaugerfilterbeutel gemäß Beispiel 1 ist dabei ebenso aus einem 7-lagigen luftdurchlässigen Material gebildet. Hierbei ist auf der Reinluftseite eine Stützlage (außen) angeordnet, an die sich in Richtung Innenraum zwei Feinfilterlagen (Meltblown auf virgin PP) anschließen. Die beiden Meltblownlagen werden von einer weiteren Stützlage eingefasst. Hieran schließen sich zwei Kapazitätslagen C und D an, die abschließend von einer auf der Dreckluftseite (innen) liegenden Stützlage eingeschlossen werden. Die Kapazitätslage C und D ist dabei aus einem Vliesstoffmaterial gebildet, das zu 80 Gew.-% aus Baumwollstaub und zu 20 % aus BiCo-Bindefaser gebildet ist. Dieses Vliesstoffmaterial ist detailliert in der WO 2011/057641 A1 beschrieben. Der Anteil des Baumwollstaubs in den Kapazitätslagen wird dabei zum Gesamtanteil ein Recyclat hinzugezählt.

Mit einem derartigen Beispiel wird ein Anteil von recycliertem Material, d. h. der Summe an recyclierten Kunststoffen, sowie Baumwollstaub von 60,5 Gew.-%, bezogen auf den gesamten Staubsaugerfilterbeutel erzielt.

**Beispiel 2**

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage A | 35 | 5,9 | 100 |
| Kapazitätslage D | 35 | 5,9 | 80 |
| Stützlage innen | 15 | 2,5 | 100 |
| Halteplatte | | 5,0 | 0 |
| Filterbeutel gesamt | | 31,4 | **64,3** |

Der Staubsaugerfilterbeutel gemäß Beispiel 2 ist dabei in Analogie zum Staubsaugerfilterbeutel gemäß Beispiel 1 aufgebaut. Die äußere Kapazitätslage entspricht dabei einer Kapazitätslage gemäß den Beispielen 6 bis 8, d. h. einem kardierten Stapelfaservliesstoff, der zu 100 % aus Fasern aus recyceltem PET gebildet ist. Der Recyclat-Anteil eines fertigen Staubsaugerfilterbeutels entspricht 64,3 Gew.-%.

**Beispiel 3**

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 100 |
| Filterbeutel gesamt | | 31,4 | **76,4** |

Der Staubsaugerfilterbeutel gemäß Beispiel 3 entspricht einem Staubsaugerfilterbeutel gemäß Beispiel 1 mit dem Unterschied, dass die Halteplatte zu 100 % aus rPET gebildet ist. Der Gesamtanteil an recyclierten Materialien in diesem Staubsaugerfilterbeutel beträgt 76,4 Gew.-%.

**Beispiel 4**

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 80 |
| Meltblown | 15 | 2,5 | 80 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 100 |
| Filterbeutel gesamt | | 31,4 | **89,3** |

Der Staubsaugerfilterbeutel gemäß Beispiel 4 entspricht dem Staubsaugerfilterbeutel gemäß Beispiel 3, mit dem Unterschied, dass die beiden Feinfilterlagen aus einem Bikomponenten-Meltblown mit einem Kern aus rPET und einer Hülle aus Polypropylen gebildet sind. Der Gesamtanteil an Recyclat eines derartigen Staubsaugerfilterbeutels beträgt 89,3 Gew.-%.

Die vorliegende Erfindung betrifft eine Verwendung einer Bikomponentenfaser zur Herstellung eines Vliesstoffes, der ein faser- und/oder staubförmiges recycliertes Material aus der Herstellung von Textilien beinhaltet. Diese Bikomponentenfaser wird dabei zur Bindung des faser- und/oder staubförmigen recyclierten Materials eingesetzt. Diese Bikomponentenfaser ist vom Kern-Mantel-Typ (core-core-bicomponent fiber) und umfasst einen Kern aus einem recyclierten Kunststoff, der insbesondere recycliertes Polyethylentherephthalat (rPET) oder recycliertes Polypropylen (rPP) darstellt.

Eine bevorzugte Ausführungsform sieht vor, dass der Mantel aus einem frischen Kunststoff (virgin Kunststoff), insbesondere Polypropylen gebildet ist.

Gemäß der Erfindung beinhaltet der Mantel hierbei Ladungspersistenz-Additive, insbesondere Magnesiumstearat.

Der Gewichtsanteil des Kerns, bezogen auf die gesamte Faser beträgt vorzugsweise von 50 bis 95 Gew.-%.

Insbesondere weist die Bikomponentenfaser einen Durchmesser von 0,5 bis 10 µm auf. Die Bikomponentenfaser hat hierbei insbesondere einen kreisförmigen Querschnitt.

## Patentansprüche

1. Verwendung einer Bikomponentenfaser zur Herstellung eines Vliesstoffes, der ein faser- und/oder staubförmiges recycliertes Material aus der Herstellung von Textilien beinhaltet, wobei die Bikomponentenfaser vom Kern-Mantel-Typ (core-sheath-bicomponent fiber) ist und einen Kern aus einem oder mehreren recyclierten Kunststoffen umfasst,
**dadurch gekennzeichnet, dass**
die Bikomponentenfaser zur Bindung des faser- und/oder staubförmigen recyclierten Materials eingesetzt wird, und
der Mantel Ladungspersistenz-Additive beinhaltet.

2. Verwendung einer Bikomponentenfaser nach Anspruch 1, **dadurch gekennzeichnet, dass** der Kern aus recyclierten Polyethylentherephthalat (rPET) oder recycliertem Polypropylen (rPP) gebildet ist.

3. Verwendung einer Bikomponentenfaser nach einem der vorhergehenden Ansprüche, **dadurch gekennzeichnet, dass** der Kern aus einem oder mehreren recyclierten Kunststoffen gebildet ist.

4. Verwendung einer Bikomponentenfaser nach einem der vorhergehenden Ansprüche, **dadurch gekennzeichnet, dass**
der Mantel aus einem frischen Kunststoff, insbesondere Polypropylen gebildet ist, oder
sowohl Kern als auch Mantel aus einem recyclierten Kunststoff oder mehreren recyclierten Kunststoffen gebildet sind.

5. Verwendung einer Bikomponentenfaser nach einem der vorhergehenden Ansprüche, **dadurch gekennzeichnet, dass** der Kern aus recycliertem PET und der Mantel aus frischem Polypropylen, Polycarbonat oder PET gebildet ist.

6. Verwendung einer Bikomponentenfaser nach einem der vorhergehenden Ansprüche, **dadurch gekennzeichnet, dass** der Mantel Magnesiumstearat beinhaltet.

7. Verwendung einer Bikomponentenfaser nach einem der vorhergehenden Ansprüche, **dadurch gekennzeichnet, dass** der Gewichtsanteil des Kerns, bezogen auf die gesamte Faser von 50 bis 95 Gew.-% beträgt.

8. Verwendung einer Bikomponentenfaser nach einem der vorhergehenden Ansprüche, **dadurch gekennzeichnet, dass** der Durchmesser der Bikomponentenfaser 0,5 bis 10 µm beträgt.

9. Verwendung einer Bikomponentenfaser nach einem der vorhergehenden Ansprüche, **dadurch gekennzeichnet, dass** sie vollständig aus recyclierten Kunststoffen besteht.

10. Verwendung einer Bikomponentenfaser nach einem der vorhergehenden Ansprüche, **dadurch gekennzeichnet, dass** Kern und Mantel aus unterschiedlichen Materialien gebildet sind.

11. Verwendung einer Bikomponentenfaser nach einem der vorhergehenden Ansprüche, wobei die Bikomponentenfaser in Form von Stapelfasern ist.

## Claims

1. Use of a bicomponent fiber for producing a non-woven fabric comprising a filiform and/or dust-like, recycled material from the manufacture of textiles, wherein the bicomponent fiber is of the core-sheath type (core-sheath bicomponent fiber) and comprises a core made of one or more recycled plastic materials,
**characterized in that** the bicomponent fiber is used for bonding of the filiform and/or dust-like, recycled material and the sheath comprises charge persistence additives.

2. Use of a bicomponent fiber according to claim 1, **characterized in that** the core is made of recycled polyethylene terephthalate (rPET) or recycled polypropylene (rPP).

3. Use of a bicomponent fiber according to any one of the preceding claims, **characterized in that** the sheath is made of one or more recycled plastic materials.

4. Use of a bicomponent fiber according to any one of the preceding claims, **characterized in that**
the sheath is made of fresh plastic material, in particular polypropylene, or
both the core and the sheath are made of a recycled plastic material or a plurality or recycled plastic materials.

5. Use of a bicomponent fiber according to any one of the preceding claims, **characterized in that** the core is made of recycled PET, and the sheath is made of fresh polypropylene, polycarbonate or PET.

6. Use of a bicomponent fiber according to any one of the preceding claims, **characterized in that** the sheath comprises magnesium stearate.

7. Use of a bicomponent fiber according to any one of the preceding claims, **characterized in that** the percentage by weight of the core, based on the entire fiber, is 50 to 95% by weight.

8. Use of a bicomponent fiber according to any one of the preceding claims, **characterized in that** the diameter of the bicomponent fiber is 0.5 to 10 µm.

9. Use of a bicomponent fiber according to any one of the preceding claims, **characterized by** consisting entirely of recycled plastic materials.

10. Use of a bicomponent fiber according to any one of the preceding claims, **characterized in that** the core and the sheath are made of different materials.

11. Use of a bicomponent fiber according to any one of the preceding claims, wherein the bicomponent fiber is in the form of staple fibers.

## Revendications

1. Utilisation d'une fibre bicomposant pour la fabrication d'un non-tissé comprenant un matériau recyclé, sous forme fibreuse et/ou pulvérulente, provenant de la fabrication de textiles, la fibre bicomposant étant de type âme-gaine (core-sheath-bicomponent fiber) et comprenant une âme fabriquée à partir d'une ou plusieurs matières plastiques recyclées,
**caractérisée en ce que** la fibre bicomposant est utilisée pour lier le matériau recyclé sous forme fibres et/ou de poussière, et la gaine contient des additifs de persistance de charge.

2. Utilisation d'une fibre bicomposant selon la revendication 1, **caractérisée en ce que** l'âme est constituée de polytéréphtalate d'éthylène recyclé (PETr) ou de polypropylène recyclé (PPr).

3. Utilisation d'une fibre bicomposant selon l'une quelconque des revendications précédentes, **caractérisée en ce que** l'âme est constituée d'une ou plusieurs matières plastiques recyclées.

4. Utilisation d'une fibre bicomposant selon l'une quelconque des revendications précédentes, **caractérisée en ce que** la gaine est constituée d'une matière plastique fraîche, en particulier de polypropylène ou aussi bien l'âme que la gaine sont constituées d'une matière plastique recyclée ou de plusieurs matières plastiques recyclées.

5. Utilisation d'une fibre bicomposant selon l'une quelconque des revendications précédentes, **caractérisée en ce que** l'âme est constituée de PET recyclé et la gaine est constituée de polypropylène, polycarbonate ou PET frais.

6. Utilisation d'une fibre bicomposant selon l'une quelconque des revendications précédentes, **caractérisée en ce que** la gaine contient du stéarate de magnésium.

7. Utilisation d'une fibre bicomposant selon l'une quelconque des revendications précédentes,
**caractérisée en ce que** le pourcentage en poids de l'âme, par rapport à la totalité de la fibre est compris entre 50 et 95 % en poids.

8. Utilisation d'une fibre bicomposant selon l'une quelconque des revendications précédentes, **caractérisée en ce que** le diamètre de la fibre bicomposant est compris entre 0,5 et 10 µm.

9. Utilisation d'une fibre bicomposant selon l'une quelconque des revendications précédentes, **caractérisée en ce qu'**elle se compose entièrement de matières plastiques recyclées.

10. Utilisation d'une fibre bicomposant selon l'une quelconque des revendications précédentes, **caractérisée en ce que** l'âme et la gaine sont constituées de matériaux différents.

11. Utilisation d'une fibre bicomposant selon l'une quelconque des revendications précédentes, dans laquelle la fibre bicomposant est sous forme de fibres discontinues.
